# EUROPEAN PATENT APPLICATION

(11) **EP 3 203 765 A1**
(43) Date of publication of application: **09.08.2017**
(21) Application number: 14903300.3
(22) Date of filing: 02.10.2014
(51) Int. Cl.: H04W 8/26, H04W 36/08, H04W 84/10, H04W 92/14

(54) **REPEATER AND BASE STATION SYSTEM**

(71) Applicant: Fujitsu Ltd., Kawasaki-shi, Kanagawa 211-8588 (JP)
(72) Inventor: HIRATA, Akira, Kawasaki-shi Kanagawa 211-8588 (JP)
(74) Representative: Hutchison, James
(86) International application number: PCT/JP2014/076469
(87) International publication number: WO 2016/051578

(57) **Abstract**

A base station (120) accommodates a first cell and a second cell. A storage unit (111) of a relay apparatus (110) associates and stores first identification information and communication links. The first identification information is identification information given to the first cell of the base station (120) connected to the relay apparatus (110). The first identification information has exclusive of the predetermined tail position, values common to the identification information given to the second cell. A transfer control unit (112), when first identification information exactly matching second identification information is not stored in the storage unit (111), searches the first identification information stored in the storage unit (111), for first identification information that forward matches the second identification information. The second identification information is included in a signal received from another communications apparatus and is identification information indicating a destination base station of the signal. The transfer control unit (112) transfers a request signal by a communication link stored in the storage unit (111) and associated with the first identification information forward matching the second identification information.

## Description

### TECHNICAL FIELD

The present invention relates to a relay apparatus and a base station system.

### BACKGROUND ART

In carrier aggregation (CA) through a home evolved Node B (HeNB)-gateway (GW), when a HeNB is a base station that manages multiple home cells, a conventional mobile communications system assigns multiple HeNB IDs to the HeNB (for example, refer to Patent Document 1).

Further, according to a communications method, an eNB that is a base station, associates and manages cell identities and physical cell identification information for each of the cells under the control of a HeNB and thereby, performs handover to a cell #1 under the control of the HeNB (for example, refer to Patent Document 2).

Patent Document 1: Japanese Laid-Open Patent Publication No. 2012-044320
Patent Document 2: Japanese Laid-Open Patent Publication No. 2013-081033

### DISCLOSURE OF INVENTION

### PROBLEM TO BE SOLVED BY THE INVENTION

Nonetheless, with the conventional techniques, when a base station accommodates multiple cells, a single base station has identification information each of cells. Therefore, in one aspect of the conventional techniques, a problem arises in that the base station that is the transfer destination of a signal received by a relay apparatus is difficult to identify. In another aspect, when the relay apparatus manages the identification information of all of the cells of a base station as destination information related to transfer processing, a problem arises in that the amount of information managed at the relay apparatus becomes large, placing a large load on the relay apparatus.

According to one aspect of the present invention, one object is to enable identification of a base station to which a received signal is to be transferred, even when each base station accommodates multiple cells. According to another aspect of the present invention, one object is to provide a relay apparatus and a base station system that enable the transfer destination of a signal to be identified at a relay apparatus that accommodates base stations having multiple cells and that improve the utilization efficiency of memory resources provided to accommodate base stations having multiple cells (no increase of accommodated base stations, memory resource reduction).

### MEANS FOR SOLVING PROBLEM

According to one aspect of the present invention, a relay apparatus and a base station system are proposed that perform a process of associating and storing first identification information given to a first cell of a base station connected to the relay apparatus and a communication link between the relay apparatus and the base station, the first identification information being configured to have, exclusive of a predetermined tail position, values common to identification information given to a second cell of the base station different from the first cell; and searching the stored first identification information for the first identification information that forward matches second identification information and transferring a signal by a communication link stored associated with the forward matching first identification information, when the first identification information matching the second identification information is not stored, the second identification information being included in the signal received from a second communications apparatus and indicating a destination base station of the signal.

### EFFECT OF THE INVENTION

According to one aspect of the present invention, even when a base station accommodates multiple cells, the base station that is the transfer destination of a received signal may be identified.

### BRIEF DESCRIPTION OF DRAWINGS

FIG. 1 is a diagram depicting an example of a relay apparatus and a base station system according to an embodiment;
FIG. 2A is a diagram depicting an example of connection of small base station system;
FIG. 2B is a diagram depicting an example of eNB IDs of a MeNB and a HeNB;
FIG. 3 is a diagram depicting an example of a configuration of a HeNB-GW of the small base station system;
FIG. 4 is a diagram depicting an example of a S1AP: S1 SETUP REQUEST;
FIG. 5 is a flowchart of an example of a registration process of the S1 management table performed by the HeNB-GW;
FIG. 6 is a diagram depicting an example of S1AP: ENB CONFIGURATION UPDATE;
FIG. 7 is a flowchart of an example of an updating process of the S1 management table performed by the HeNB-GW;
FIG. 8 is a diagram depicting an example of S1 management table updating (part 1);
FIG. 9 is a diagram depicting an example of S1 management table updating (part 2);
FIG. 10 is a diagram depicting an example of S1 management table updating (part 3);
FIG. 11 is a diagram depicting an example of transfer operation of the small base station system at the time of handover;
FIG. 12 is a diagram depicting an example of measurement results that the UE sends to the MeNB;
FIG. 13 is a diagram depicting an example of a S1AP: HANDOVER REQUIRED;
FIG. 14 is a diagram depicting an example of a S1AP: HANDOVER REQUEST;
FIG. 15A is a flowchart (part 1) of an example of a transfer control process performed by the HeNB-GW;
FIG. 15B is a flowchart (part 2) of the example of the transfer control process performed by the HeNB-GW;
FIG. 16 is a diagram depicting an example of an eNB ID identifiable in the transfer control process of the HeNB-GW;
FIG. 17 is a flowchart of an example of processing performed by the HeNB; and
FIG. 18 is a flowchart of an example of the handover process performed by HeNB-GW in the modification example.

### BEST MODE(S) FOR CARRYING OUT THE INVENTION

Preferred embodiments of the disclosed technology will be described in detail with reference to the accompanying drawings.

### (Embodiment)

### (Example of relay apparatus and base station system according to embodiment)

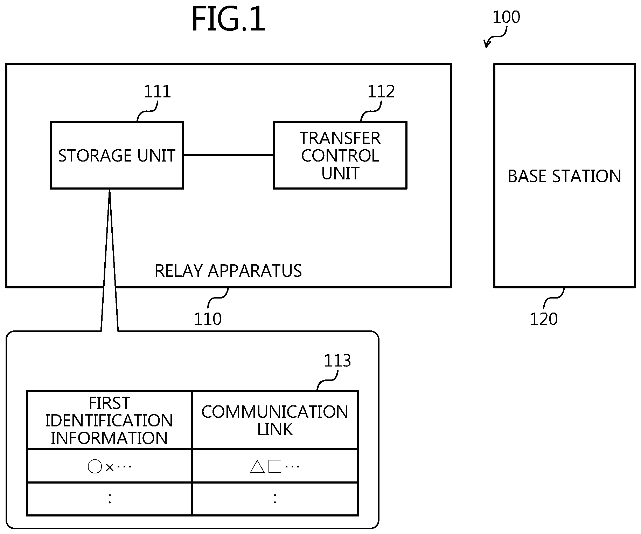

FIG. 1 is a diagram depicting an example of a relay apparatus and a base station system according to an embodiment. In FIG. 1, a base station system 100 has a relay apparatus 110 and a base station 120. The relay apparatus 110 is, for example, a HeNB-GW. The base station 120 is, for example, a HeNB. The base station 120 accommodates multiple cells. For example, the base station 120 accommodates a first cell and a second cell.

The relay apparatus 110 has a storage unit 111 and a transfer control unit 112. The storage unit 111 stores associated information 113 that associates first identification information and communication links. The first identification information is identification information given to the first cell of the base station 120 connected to the relay apparatus 110. Excluding a predetermined tail position, the first identification information has values common to identification information given to the second cell different from the first cell.

The communication links are communication links between the relay apparatus 110 and the base station 120. A communication link is, for example, a communication link of a S1 interface. The communication links associated with the first identification information in the associated information 113, for example, include information for identifying the communication links such as traffic area codes (TACs) and public land mobile networks (PLMNs).

The transfer control unit 112, for example, judges whether first identification information matching second identification information is stored in the storage unit 111. The second identification information is identification information included in a signal received from another communications apparatus and is identification information indicating the destination base station of the signal. The second identification information is, for example, identification information given to a cell of the destination base station. Another communications apparatus is an apparatus different from the relay apparatus 110 and the base station 120 and, for example, is a core apparatus such as a mobile management entity (MME) or a serving-GW (S-GW). Further, matching of the first identification information and the second identification information as used here, for example, is exact matching.

A signal received from another communications apparatus, for example, may be a signal requesting that the connection destination of a mobile station connected to a cell of the other base station different from the base station 120 be switched to a cell of a destination base station. Hereinafter, a signal received from another communications apparatus by the relay apparatus 110 will be described as a request signal.

The transfer control unit 112 performs a starts-with search of the first identification information stored in the storage unit 111 and searches for first identification information that forward matches the second identification information, when first identification information exactly matching the second identification information is not stored in the storage unit 111. The transfer control unit 112 transfers the request signal by a communication link that in the storage unit 111, is associated with first identification information forward matching the second identification information. Thus, the transfer control unit 112 is able to transfer the request signal to the destination base station.

When first identification information exactly matching the second identification information is stored in the storage unit 111, the transfer control unit 112 transfers the request signal by a communication link that in the storage unit 111, is associated with the first identification information exactly matching the second identification information.

The base station 120 performs processing based on a signal transferred by the relay apparatus 110, the signal being received from another communications apparatus by the relay apparatus 110. When the signal received from another communications apparatus and transferred to the base station 120 by the relay apparatus 110 is a request signal, the processing performed by the base station 120, for example, is a handover process.

The base station 120, when receiving the signal transferred by a communication link associated with first identification information that forward matches the second identification information, performs cell distribution processing based on the identification information indicated by the signal transferred from the relay apparatus 110. For example, the base station 120, unlike the relay apparatus, stores identification information for each of the cells under the control of base station 120. Therefore, the base station 120 performs a cell identification process based on the identification information indicated by the signal (request signal, etc.) transferred from the relay apparatus.

Further, for example, a bit length of a predetermined tail position of the first identification information or of the identification information given to the second cell is a first bit length or shorter. The transfer control unit 112 searches for first identification information that forward matches the second identification information by at least a second bit length that corresponds to a difference of the bit length of the first identification information and the first bit length. The transfer control unit 112 transfers the request signal by a communication link stored in the storage unit and associated with the first identification information forward matching the second identification information by the second bit length or longer.

Hereinafter, the bit length of the first identification information is assumed to be, for example, 28 bits. The first bit length may be configured to be an arbitrary value of 1 bit or greater. The second bit length, for example, is 27 bits or less when the bit length of the first identification information is assumed to be 28 bits. Further, the second bit length, for example, may be set to be 25 bits or greater when the bit length of the first identification information is assumed to be 28 bits and the first bit length is assumed to be 3 bits. For example, when the base station 120 accommodates 2 cells, the first bit length is the last 1-bit of the first identification information or greater. Further, when the first bit length is the last 3-bits of the first identification information, 8 cells may be identified.

The transfer control unit 112 searches for the first identification information that forward matches the second identification information to a greatest extent among the first identification information forward matching the second identification information. The transfer control unit 112 transfers the request signal by a communication link stored in the storage unit 111 and associated with the first identification information that forward matches the second identification information to the greatest extent. For example, assuming the bit length of the first identification information is 28 bits, the greatest extent to which first identification information forward matches the second identification information is 27 bits.

When the storage unit 111 does not store first identification information having an upper 27 bits that forward match the second identification information, the transfer control unit 112 searches for first identification information that forward matches the second identification information to the next greatest extent of 26 bits. When the storage unit 111 does not store first identification information having an upper 26 bits that forward match the second identification information, the transfer control unit 112 searches for first identification information that forward matches the second identification information to the next greatest extent of 25 bits. Thereafter, for example, the upper bit count is decreased until a predetermined bit count that is preconfigured is reached while the transfer control unit 112 repeats the search. In this manner, the extent of forward matching gradually decreases from that of the greatest bit range to the predetermined bit count. As a result, for example, the number of searches may be reduced, enabling improved search efficiency.

In this case, the transfer control unit 112, for example, may judge whether transfer of the request signal using the communication link stored in the storage unit 111 and associated with the first identification information that forward matches the second identification information to the greatest extent has failed. Failure in transferring the request signal, for example, includes the transfer itself not being possible.

Excluding the predetermined tail position, common values may be set between different base stations 120. In this case, a failure in transferring the request signal, for example, includes receiving from the base station 120 that is the transfer destination, indication that the request signal was not transferred, when the first cell of the first identification information that forward matches the second identification information to the greatest extent is not accommodated by the base station 120 that is the transfer destination.

The transfer control unit 112, when failing in transferring the request signal, may transfer the request signal by a communication link stored in the storage unit 111 and associated with the first identification information that forward matches the second identification information to the next greatest extent after the first identification information that matches the second identification information to the greatest extent. For example, when the transfer of the request signal using the communication link associated with the first identification information in which the upper 27 bits forward match the second identification information fails, the request signal is transferred by a communication link associated with first identification information in which the upper 26 bits, which is the next greatest extent, forward match.

However, the associated information 113 may store another communication link associated with other first identification information in which the upper 27 bits forward match the second identification information. In this case, the request signal is transferred by this communication link associated with this other first identification information in which the upper 27 bits forward match the second identification information.

Further, for example, when the transfer of the request signal using the communication link associated with the first identification information in which the upper 26 bits forward match the second identification information fails, the request signal is transferred by a communication link associated with first identification information in which the upper 25 bits, which is the next greatest extent, forward match. Thereafter, for example, this transfer may be repeated until a predetermined bit count that is preconfigured is reached.

Common values in the first identification information are not limited to a predetermined tail position and may be at a predetermined head position. For example, in the first identification information, values exclusive of a predetermined head position may be configured to be common to the identification information given to the second cell of the base station 120 different from the first cell of the base station connected to the relay apparatus 110. In this case, when first identification information exactly matching the second identification information is not stored in the storage unit 111, the transfer control unit 112 searches the first identification information stored in the storage unit 111, for first identification information that reverse matches the second identification information. Further, the transfer control unit 112 transfer the request signal by a communication link stored in the storage unit 111 and associated with reverse-matching first identification information.

### (Example of connection of small base station system)

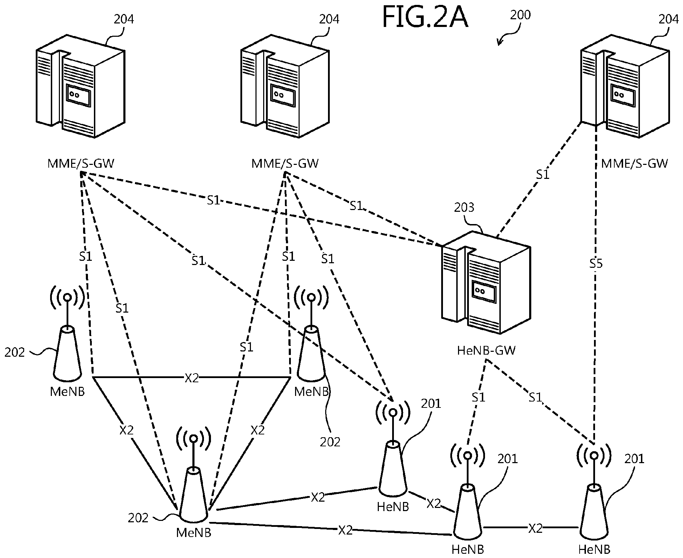

FIG. 2A is a diagram depicting an example of connection of a small base station system. As depicted in FIG. 2A, a small base station system 200 has HeNBs 201, macro eNBs (MeNBs) 202, a HeNB-GW 203, and a core apparatus such as a MME, a S-GW, and the like (hereinafter, "MME 204").

The HeNB 201 and the MeNB 202 are Long Term Evolution (LTE) wireless base stations. LTE is communication standards of the standards organization 3rd Generation Partnership Project (3GPP). The MeNB 202 has multiple cells and, for example, is configured to communicate by CA. Further, in the present embodiment, the HeNB 201 also has multiple cells and is configured to communicate by CA.

CA is a communications scheme of integrally performing communication by multiple carriers. CA enables faster wireless communication. Under CA, for example, a base station has multiple cells of differing frequencies and among these cells, one may be operated as a primary cell (PCell) that mainly transmits and receives control signals (measurement, mobility, etc.). Further, under CA, the other cells may be operated as secondary cells (SCells) that mainly perform data communication. The cells for performing CA are identified by an E-UTRAN cell global identifier (ECGI).

The HeNB 201, which is a small base station, is installed in greater number than the MeNB 202, which builds large cells. When the HeNBs 201 directly connect to the MMEs 204, the MMEs 204 manage a large number of the HeNBs 201 whereby the load on the MMEs 204 increases. Therefore, the HeNBs 201 and the MMEs 204, for example, are connected via the HeNB-GW 203. As a result, the number of the HeNBs 201 that are directly managed by the MMEs 204 may be reduced and the load on the MMEs 204 may be decreased.

The apparatuses, for example, are connected via the S1 interface, an X2 interface, a S5 interface, and the like. The S1 interface, for example, is an interface connecting a wireless base station such as the HeNB 201, the MeNB 202, etc. and the core apparatus side. For example, the S1 interface is used in the connection of the HeNBs 201 and the HeNB-GW 203, the connection of the HeNB-GW 203 and the MMEs 204, the connection of the HeNBs 201 and the MMEs 204, the connection of the MeNBs 202 and the MMEs 204, etc.

The X2 interface, for example, is an interface connecting two wireless base stations such as the HeNB 201, the MeNB 202, etc. For example, the X2 interface is used to connect HeNBs 201 to each other, to connect MeNBs 202 to each other, and to connect a HeNB 201 and a MeNB 202. The S5 interface, for example, is an interface used in actual data communication of moving pictures and image data. For example, the S5 interface is an interface connected between the HeNB 201 or the MeNB 202 and a S-GW.

### (Example of eNB ID of MeNB and HeNB)

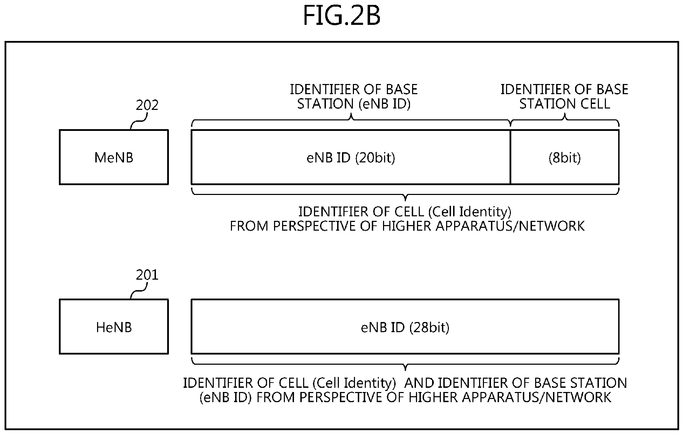

FIG. 2B is a diagram depicting an example of eNB IDs of a MeNB and HeNB. As depicted in FIG. 2B, all of the cells of the LTE network retain a 28-bit Cell Identity that is a unique value on the entire network. All of the wireless base stations on the LTE network retain an eNB ID that is a unique value on the entire network. Normally, the Cell Identities and the eNB IDs have the following relationship.

In the case of the MeNB 202, which is a single wireless base station having multiple cells, the 28-bit Cell Identities of the cells under the control of the MeNB 202 share the same upper 20 bits. Therefore, the values of the upper 20 bits are the eNB ID of the MeNB 202. In other words, the MeNB 202 is represented by an eNB ID identifier of 20 bits. The remaining 8-bit identifier is used to identify the respective cells of the base station.

On the other hand, in the case of the HeNB 201, in the cells of the HeNB 201, the values of the 28-bit Cell Identity are the eNB ID of the HeNB 201. Since the HeNB 201 is installed in greater number as compared to the MeNB 202, assuming a 20-bit eNB ID having only a pattern of 1048576 as the identifier of the base station itself for the HeNB 201 is used, depletion of eNB IDs may occur.

Therefore, in the case of the HeNB 201, identification of the cells and identification of wireless base station itself are performed by 28-bit values. In the present embodiment, predetermined upper bits of the 28 bits are common between the multiple cells of the same HeNB 201.

According to one aspect of the present embodiment, a common bit length may be configured corresponding to the number of cells, etc. accommodated by a base station. For example, when the HeNB 201 accommodates two cells, the upper 27 bits of the 28-bit Cell Identity (eNB ID) are common among the cells. The HeNB-GW 203 accommodated by the HeNBs 201 performs a search for an eNB ID having a longest bit length forward matching the ID of the cell indicating the destination of a received signal and is thereby able to identify the HeNB 201 that is the transfer destination of the signal.

The first identification information described in FIG. 1, for example, is realized by a 28-bit eNB ID. The second identification information is realized by a Target Cell ID that indicates a target of a connection request from a mobile station. The base station system 100 depicted in FIG. 1, for example, is realized by the small base station system 200; and the relay apparatus 110, for example, is realized by the HeNB-GW 203. Further, the base station 120, for example, is realized by the HeNB 201.

### (Example of configuration of HeNB-GW of small base station system)

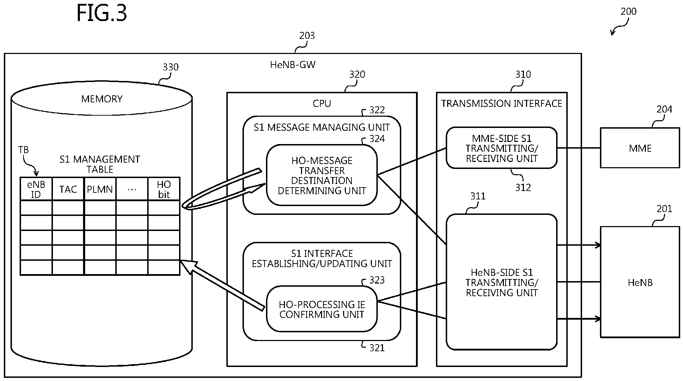

FIG. 3 is a diagram depicting an example of a configuration of a HeNB-GW of the small base station system. As depicted in FIG. 3, the HeNB-GW 203 of the small base station system 200 is connected to the HeNB 201 via the S1 interface. The HeNB-GW 203 is connected to the MME 204 via the S1 interface. The HeNB-GW 203 has a transmission interface 310, a central processing unit (CPU) 320, and memory 330.

The transmission interface 310 has a HeNB-side S1 transmitting/receiving unit 311 and a MME-side S1 transmitting/receiving unit 312. The CPU 320 has a S1 interface establishing/updating unit 321 and a S1 message managing unit 322. The memory 330 stores a S1 management table TB. The HeNB-side S1 transmitting/receiving unit 311 transmits messages to and receives messages from the HeNB 201.

### (S1AP: When S1 SETUP REQUEST is received)

The HeNB-side S1 transmitting/receiving unit 311, when receiving a message that is a S1AP: S1 SETUP REQUEST indicating a S1 connection request, notifies the S1 interface establishing/updating unit 321 of the SETUP REQUEST. S1AP is a S1 control plane protocol and is placed on Stream Control Transmission Protocol (SCTP)/IP. The S1 interface establishing/updating unit 321 establishes and manages the state of the S1 interface.

The S1 interface establishing/updating unit 321 has a handover (HO)-processing information element (IE) confirming unit 323. The S1 interface establishing/updating unit 321, upon receiving a SETUP REQUEST, starts the HO-processing IE confirming unit 323. The HO-processing IE confirming unit 323 judges whether the HeNB 201 that received the SETUP REQUEST is a HeNB 201 requesting special processing in HO. Although described in detail hereinafter, the special processing is, for example, at the time of handover, a process of searching the S1 management table TB, for the HeNB 201 that accommodates the cell given the eNB ID having predetermined upper bits matching the Target Cell ID.

For example, the HO-processing IE confirming unit 323 confirms whether IE:eNB Name, which is an optional parameter, is included in the SETUP REQUEST. In the IE:eNB Name, for example, among the 28 bits indicating the Cell Identity, HO bit information indicating specification of the predetermined upper bits common between cells is stored.

When IE:eNB Name is included in the SETUP REQUEST, the HO-processing IE confirming unit 323 registers the HO bit information into the S1 management table TB with normal Si interface related information. When IE:eNB Name is not included in the SETUP REQUEST, the HO-processing IE confirming unit 323 unregisters the HO bit information, or registers into the S1 management table TB, information indicating that all 28 bits are used in HO processing.

The S1 management table TB registers eNB IDs, TACs, PLMNs, HO bit information, and the like. A TAC is information identifying a position registration area (tracking area) in a LTE mobile communications system and, for example, a unique TAC is assigned to a single position registration area. A PLMN, for example, indicates a connected mobile network operator. The HO bit information indicates an upper bit count of the Cell Identity used in the special processing at the time of handover.

The Cell Identity bit count registered in the S1 management table TB may be a value determined when S1 establishment is performed between the HeNB-GW 203 and the HeNB 201, or may be a value predetermined for the system overall. Further, the Cell Identity bit count may be a value sent from non-depicted maintenance apparatuses.

The HO-processing IE confirming unit 323 transmits to the HeNB 201 that transmitted the SETUP REQUEST, a S1 SETUP RESPONSE indicating registration completion, the S1 SETUP RESPONSE being transmitted via the HeNB-side S1 transmitting/receiving unit 311.

### (S1AP: When ENB CONFIGURATION UPDATE is received)

The HeNB-side S1 transmitting/receiving unit 311, when receiving a message that is a S1AP: ENB CONFIGURATION UPDATE indicating a S1 updating request, notifies the S1 interface establishing/updating unit 321 of the message.

The S1 interface establishing/updating unit 321, upon receiving the ENB CONFIGURATION UPDATE, starts the HO-processing IE confirming unit 323. The HO-processing IE confirming unit 323 judges whether the HeNB 201 that transmitted the ENB CONFIGURATION UPDATE is a HeNB 201 requesting special processing in HO.

For example, the HO-processing IE confirming unit 323 judges whether IE:eNB Name, which is an optional parameter, is included in the ENB CONFIGURATION UPDATE. When IE:eNB Name is included in the ENB CONFIGURATION UPDATE, the HO-processing IE confirming unit 323 updates in the S1 management table TB, normal Si interface related information and S1 information that includes HO bit information. When IE:eNB Name is not included in the ENB CONFIGURATION UPDATE, the HO-processing IE confirming unit 323 updates the S1 information exclusive of the HO bit information.

The HO-processing IE confirming unit 323 transmits to the HeNB 201 that transmitted the ENB CONFIGURATION UPDATE, a message indicating updating completion, the message being transmitted via the HeNB-side S1 transmitting/receiving unit 311. The message indicating updating completion, for example, is an ENB CONFIGURATION UPDATE ACKNOWLEDGE.

In this manner, the HeNB 201 notifies the HeNB-GW 203 of only one eNB ID whereby the HeNB-GW 203 manages one eNB ID for the HeNB 201. However, in a wireless section, the HeNB 201 broadcasts to user equipment (UE), the Cell Identities of the accommodated cells. Thus, the UEs detect the Cell Identity and execute handover to the respective cell. The Cell Identity, for example, may exactly match the eNB ID sent by the HeNB 201 to the HeNB-GW 203, may forward match, or may differ.

The MME-side S1 transmitting/receiving unit 312 transmits and receives messages with the MME 204. When receiving a message that is a HANDOVER REQUEST requesting handover, the MME-side S1 transmitting/receiving unit 312 notifies the S1 message managing unit 322 of the message. The HANDOVER REQUEST is a message that the MME 204 sends to the HeNB-GW 203 when notifying the MeNB 202 that a UE in the service area requests handover.

The S1 message managing unit 322 has a HO-message transfer destination determining unit 324. The HO-message transfer destination determining unit 324, upon receiving the HANDOVER REQUEST from the MeNB 202, extracts from the S1 management table TB in the memory 330, eNB IDs (HeNB 201) having no bit specified in a HO bit information field.

The HO-message transfer destination determining unit 324 judges whether an eNB ID exactly matching the IE:Target Cell ID of the HANDOVER REQUEST is present among the extracted eNB ID. When an exactly matching NB ID is present, the HO-message transfer destination determining unit 324 determines, as a transfer destination of the HANDOVER REQUEST, the HeNB 201 accommodating the eNB ID.

When no exactly matching eNB ID is present, the HO-message transfer destination determining unit 324 extracts from the S1 management table TB in the memory 330, an eNB ID for which, for example, 27 bits are specified as HO bit information. Among extracted eNB IDs, when an eNB ID having an upper 27 bits forward matching the IE:Target Cell ID of the HANDOVER REQUEST is present, the HANDOVER REQUEST is transferred to the HeNB 201 accommodating the eNB ID.

When no eNB ID having 27 bits that forward match is present, the HO-message transfer destination determining unit 324 extracts from the S1 management table TB in the memory, an eNB ID for which, for example, 26 bits are specified in a HO bit field. When an eNB ID having an upper 26 bits forward matching the IE:Target Cell ID of the HANDOVER REQUEST is present among the extracted eNB IDs, the HANDOVER REQUEST is transferred to the HeNB 201 accommodating the eNB ID. Thereafter, the HO-message transfer destination determining unit 324 performs the same operations sequentially decreasing the upper bit count.

However, when no pertinent eNB ID is present in the S1 management table TB despite performing forward matching judgment up to a predetermined bit count, the HeNB-GW 203, for example, discards HANDOVER REQUEST. In this case, the HeNB-GW 203 may transmit from the MME-side S1 transmitting/receiving unit 312 to the MME 204, a HANDOVER FAILURE indicating failure.

In FIG. 1, for example, the storage unit 111 depicted is realized by the memory 330. The transfer control unit 112, for example, is realized by the transmission interface 310 and the CPU 320. The associated information 113, for example, is realized by the S1 management table TB.

### (Example of S1AP: S1 SETUP REQUEST)

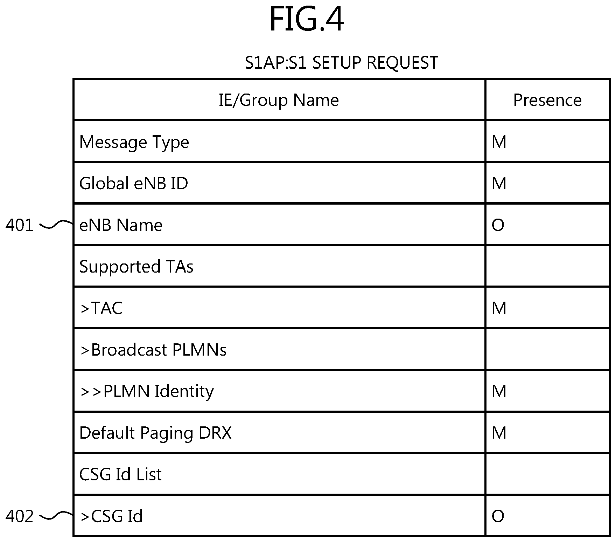

FIG. 4 is a diagram depicting an example of a S1AP: S1 SETUP REQUEST. A S1 SETUP REQUEST depicted in FIG. 4 complies with 3GPP TS 36.413. The S1 SETUP REQUEST includes "IE/Group Name" indicating a parameter and "Presence" indicating whether the parameter is mandatory.

"IE/Group Name" includes various parameters such as "Message Type" and "Global eNB ID". "M" in "Presence" indicates that the parameter is mandatory. "O" in "Presence" indicates that the parameter is optional. When "Presence" is blank for a "IE/Group Name", this indicates not a parameter, but a hierarchical structure of a group of lower ">" parameters. For example, optional parameters are of a great number and thus, are omitted from FIG. 4.

In the S1 SETUP REQUEST, an "eNB Name" indicated by reference numeral 401 is an optional parameter. The "eNB Name" has a low usage frequency and therefore, information indicating specification of the number of upper bits common between cells may be stored. Further, a parameter used in storing information indicating specification of the number of upper bits in common is not limited to an eNB Name and may be a parameter having a low usage frequency. For example, a "CSG Id" indicated by reference numeral 402 may be used.

### (Example of registration process of S1 management table performed by HeNB-GW)

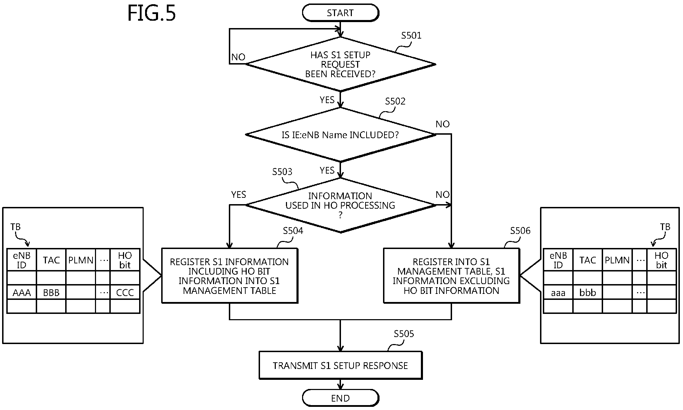

FIG. 5 is a flowchart of an example of a registration process of the S1 management table performed by the HeNB-GW. As depicted in FIG. 5, the HeNB-GW 203 judges whether a S1 SETUP REQUEST has been received from the HeNB 201 (step S501). The HeNB-GW 203 stands by until receiving a S1 SETUP REQUEST (step S501: NO). Upon receiving a S1 SETUP REQUEST (step S501: YES), the HeNB-GW 203 judges whether IE:eNB Name is included in the received S1 SETUP REQUEST (step S502).

When IE:eNB Name is included in the received S1 SETUP REQUEST (step S502: YES), the HeNB-GW 203 judges whether the information may be used in HO processing (step S503).

Information that may be used in HO processing, for example, is information indicating the number of upper bits common between cells such as 27 bits or 26 bits. When the information may be used in HO processing (step S503: YES), the HeNB-GW 203 registers S1 information including the HO bit information into the S1 management table TB (step S504). As a result, in the S1 management table TB, for example, S1 information such as an eNB ID, TAC, PLMN, HO bit information, or the like is registered.

The HeNB-GW 203 transmits to the HeNB 201, a S1 SETUP RESPONSE indicating reception completion of the S1 SETUP REQUEST (step S505), ending a series of operations. At step S502, when no IE:eNB Name is included (step S502: NO), for example, when IE:eNB Name is blank such as when the HeNB 201 does not accommodate multiple cells, the HeNB-GW 203 transitions to step S506. At step S503, when the information is not information that may be used in HO processing (step S503: NO), for example, when the information is information that indicates the number of upper bits common between cells accommodated by the HeNB 201, the HeNB-GW 203 transitions to step S506.

At step S506, the HeNB-GW 203 registers into the S1 management table TB, the S1 information excluding the HO bit information (step S506). As a result, for example, in the S1 management table TB, S1 information such as an eNB ID, TAC, PLMN, etc. may be registered exclusive of the HO bit information. Subsequently, the HeNB-GW 203 transitions to step S505.

### (Example of S1AP: ENB CONFIGURATION UPDATE)

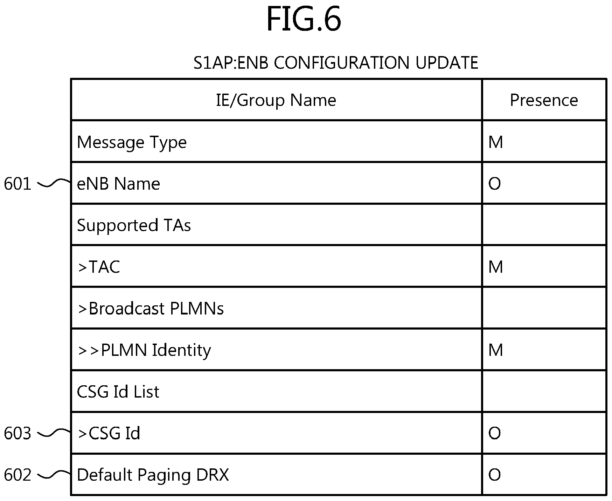

FIG. 6 is a diagram depicting an example of S1AP: ENB CONFIGURATION UPDATE. In the description of FIG. 6, description concerning points similar to the S1 SETUP REQUEST described with reference to FIG. 4 will be omitted. The ENB CONFIGURATION UPDATE depicted in FIG. 6 is compliant with 3GPP TS 36.413.

In the ENB CONFIGURATION UPDATE, an "eNB Name" indicated by reference numeral 601 and a "Default Paging DRX" indicated by reference numeral 602 are optional parameters. Further, since "eNB Name" has a low usage frequency, it is possible to store information indicating specification of an upper bit count. Further, a parameter used in storing information indicating an upper bit count is not limited to an eNB Name and may be a parameter having a low usage frequency. For example, "CSG Id" indicated by reference numeral 603 may be used.

### (Example of updating process of S1 management table performed by HeNB-GW)

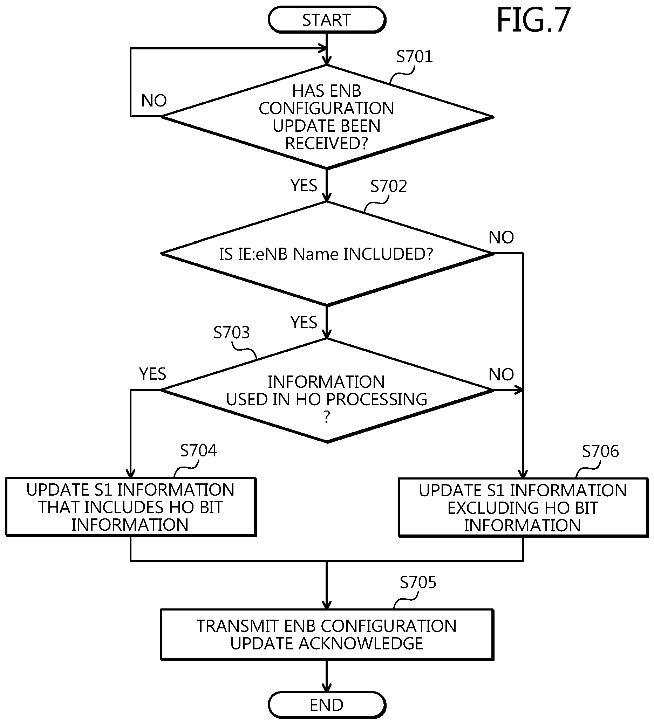

FIG. 7 is a flowchart of an example of an updating process of the S1 management table performed by the HeNB-GW. As depicted in FIG. 7, the HeNB-GW 203 judges whether an ENB CONFIGURATION UPDATE has been received from the HeNB 201 (step S701). The HeNB-GW 203 stands by until receiving an ENB CONFIGURATION UPDATE (step S701: NO). Upon receiving an ENB CONFIGURATION UPDATE (step S701: YES), the HeNB-GW 203 judges whether IE:eNB Name is included in the received ENB CONFIGURATION UPDATE (step S702).

When IE:eNB Name is included in the received ENB CONFIGURATION UPDATE (step S702: YES), the HeNB-GW 203 judges whether the information may be used in HO processing (step S703). Information that may be used in HO processing, for example, is information indicating the number of upper bits common between cells such as 27 bits or 26 bits.

When the information may be used in HO processing (step S703: YES), the HeNB-GW 203 updates in the S1 management table TB, S1 information that includes HO bit information (step S704). As a result, S1 information of the S1 management table TB is updated, e.g., HO bit information is registered or updated.

Next, the HeNB-GW 203 transmits an ENB CONFIGURATION UPDATE ACKNOWLEDGE to the HeNB 201 (step S705), and ends the series of operations. At step S702, when no IE:eNB Name is included (step S702: NO), or at step S703, when the information is not information that may be used in HO processing (step S703: NO), the HeNB-GW 203 transitions to step S706.

At step S706, the HeNB-GW 203 updates in the S1 management table TB, the S1 information excluding the HO bit information (step S706). As a result, for example, in the S1 management table TB, S1 information such as an eNB ID, TAC, PLMN, etc. may be updated exclusive of the HO bit information. The HeNB-GW 203 transitions to step S705.

### (Example of S1 management table updating)

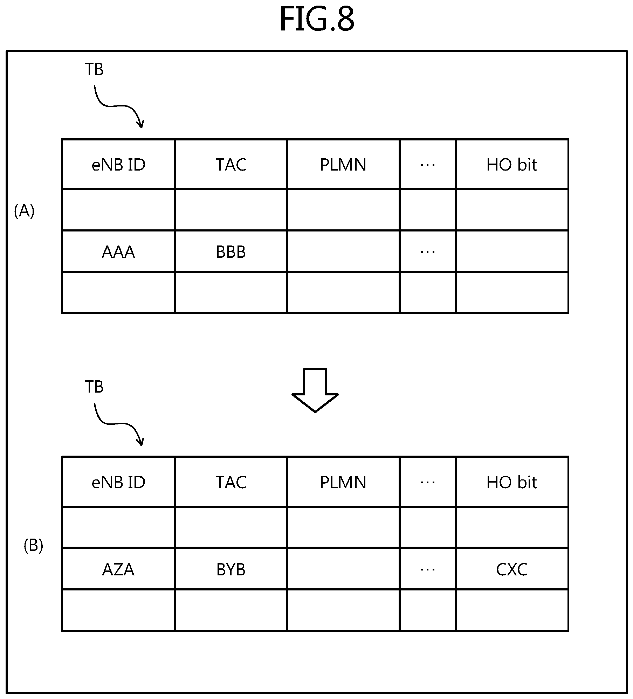

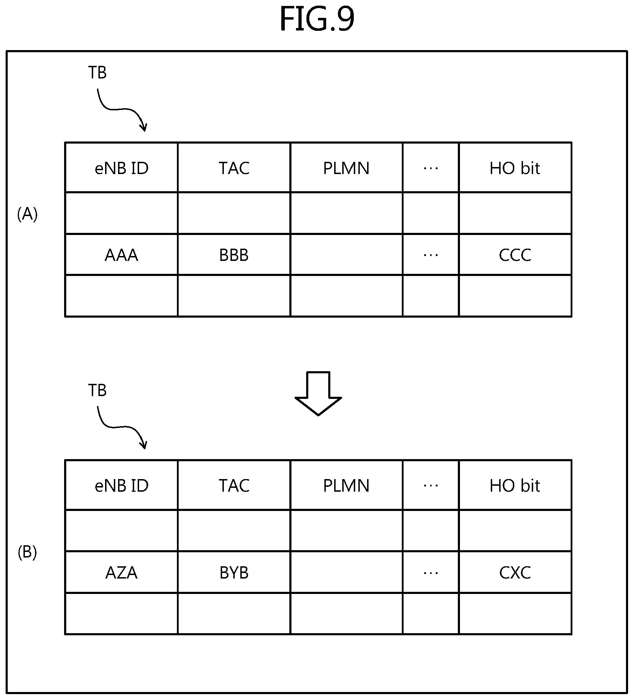

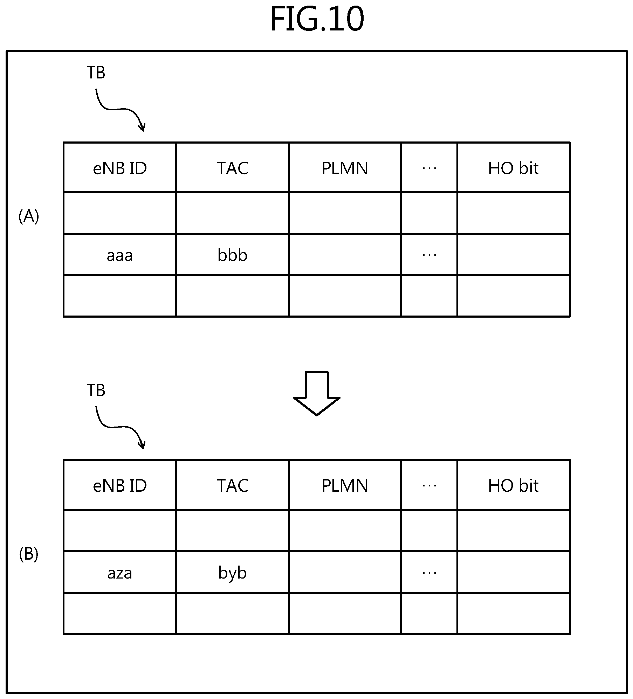

FIG. 8 is a diagram depicting an example of S1 management table updating (part 1). FIG. 9 is a diagram depicting an example of S1 management table updating (part 2). FIG. 10 is a diagram depicting an example of S1 management table updating (part 3).

At (A) in FIG. 8, a S1 SETUP REQUEST that does not include HO bit information was already received and thus, S1 information excluding HO bit information is registered in the S1 management table TB. In the storage state depicted at (A), an ENB CONFIGURATION UPDATE that includes HO bit information (refer to FIG. 6) is assumed to be received. In this case, as depicted at (B), in the S1 management table TB, the S1 information that includes the HO bit information is updated, e.g., the HO bit information is registered.

At (A) in FIG. 9, a S1 SETUP REQUEST that includes HO bit information was already received and thus, S1 information including HO bit information is registered in the S1 management table TB. In the storage state depicted at (A), an ENB CONFIGURATION UPDATE that includes HO bit information is assumed to be received. In this case, as depicted at (B), in the S1 management table TB, the S1 information includes the HO bit information is updated.

At (A) in FIG. 10, a S1 SETUP REQUEST that does not include HO bit information was already received and thus, S1 information excluding HO bit information is registered in the S1 management table TB. In the storage state depicted at (A), an ENB CONFIGURATION UPDATE that does not include HO bit information is assumed to be received. In this case, as depicted at (B), in the S1 management table TB, the S1 information excluding HO bit information is updated.

### (Example of transfer operation of a small base station system at handover)

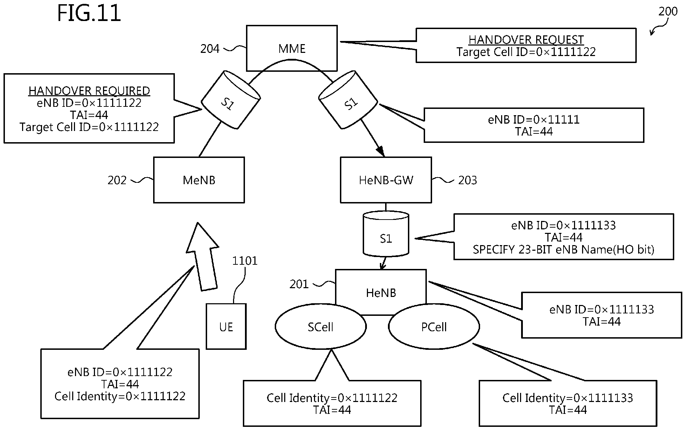

FIG. 11 is a diagram depicting an example of transfer operation of the small base station system at the time of handover. In FIG. 11, a UE 1101 is accommodated by and connected to the MeNB 202. Further, the HeNB 201 is near the UE 1101. The HeNB 201 accommodates multiple cells including an S cell (secondary cell) having a Cell Identity of (0x1111122) and a P cell (primary cell) having a Cell Identity of (0x1111133). In FIG. 11, Cell Identities are indicated in hexadecimal notation.

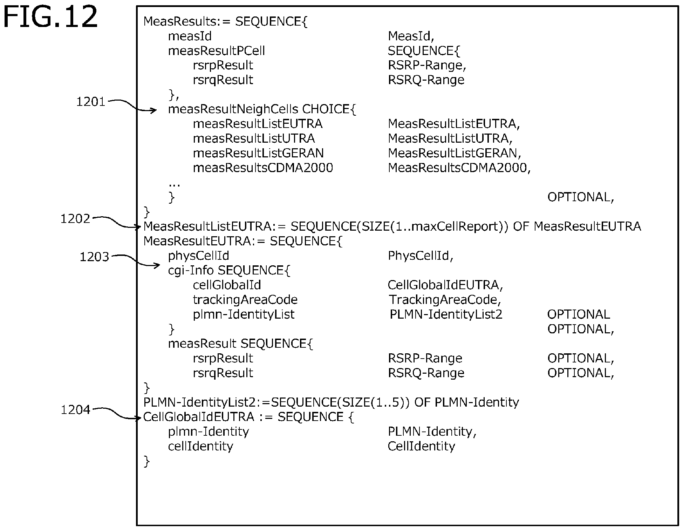

In this state, the UE 1101 is assumed to have measured a S cell for which the reception state is favorable among the cells of the HeNB 201. In this case, the UE 1101 transmits to the MeNB 202, Cell Identity(0x1111122)(=eNB ID) of the S cell as measurement results (refer to FIG. 12). The UE 1101 further transmits tracking area ID (TAI) information(=44) with the Cell Identity. The TAI information is used in TAI routing for the MME 204 to determine the transmission destination of the HANDOVER REQUEST.

The MeNB 202, upon receiving the measurement results from the UE 1101, transmits to the MME 204, a HANDOVER REQUIRED that has a Target Cell ID=0x1111122 and is addressed to the HeNB 201 of a TAI=44 and having an eNB ID=0x1111122. The MME 204, upon receiving the HANDOVER REQUIRED from the MeNB 202, transmits a HANDOVER REQUEST to the HeNB-GW 203.

Although the MME 204 does not manage the eNB ID(0x1111122) of the HeNB 201, the MME 204 manages the upper 20-bit eNB ID and the HeNB 201 of the TAI=44. Therefore, in HANDOVER REQUEST, for example, the eNB ID=0x11111, the TAI=44, and the Target Cell ID=0x1111122 are included. Further, the MME 204 performs TAI routing and is thereby able to determine the HeNB-GW 203 that is the transfer destination.

TAI routing is a technique of determining the transmission destination of a HANDOVER REQUEST by the TAI rather than by the eNB ID, after the MME 204 has received a HANDOVER REQUIRED. For example, the TAI used by the HeNB 201 under the control of the HeNB-GW 203 is unique information not used by the HeNBs 201 under the control of other HeNB-GWs 203 or other base stations. Therefore, the MME 204 the HANDOVER REQUEST may be transferred to the HeNB-GW 203 of TAI=44.

The HeNB-GW 203 receives the HANDOVER REQUEST from the MME 204. The HeNB-GW 203 refers to the S1 management table TB and judges whether an eNB ID exactly matching the Target Cell ID by all 28 bits is present. If an eNB ID exactly matching the Target Cell ID by all 28 bits is present, the HeNB-GW 203 transfers the HANDOVER REQUEST to the HeNB 201 accommodating the cell having the concerned eNB ID(=Cell Identity).

On the other hand, if no eNB ID exactly matching the Target Cell ID by all 28 bits is present, the HeNB-GW 203 performs searches for an eNB ID that forward matches the Target Cell ID. When no forward matching eNB ID is present, the number of upper bits used in judging forward matching is reduced.

For example, when a search for an eNB ID forward matching the upper 27 bits of the Target Cell ID is performed and no corresponding eNB ID is present, the HO bit information targeted for judgment of forward matching is reduced to 26. When a search for an eNB ID forward matching the upper 26 bits of the Target Cell ID is performed and no corresponding eNB ID is present, the HO bit information targeted for judgment of forward matching is reduced to 25. Thereafter as well, when no forward matching eNB ID is present, the HO bit information targeted for judgment of forward matching is sequentially reduced.

For example, the HeNB-GW 203 is assumed to obtain by a search, the eNB IDs of the HeNBs 201 for which the HO bit information is configured to be 23 and an eNB ID(=0x1111133) having an upper 23 bits (=0x11111) that match the Target Cell ID. In this case, the HeNB-GW 203 determines the HeNB 201 accommodating the cell having the eNB ID(=0x1111133) that includes 0x11111 in the upper 23 bits to be the transfer destination. The HeNB-GW 203 transfers the HANDOVER REQUEST to the determined HeNB 201.

The HeNB 201 receives the HANDOVER REQUEST from the HeNB-GW 203. The HeNB 201 is able to identify among the accommodated cells, the cell having the same Cell Identity(=0x1111122) as the Target Cell ID(=0x1111122). Therefore, the UE 1101 is able to perform handover to the cell of the Cell Identity(=0x1111122) and for which the reception state is favorable.

### (Example of measurement results sent to MeNB by UE)

FIG. 12 is a diagram depicting an example of measurement results that the UE sends to the MeNB. The measurement results depicted in FIG. 12 comply with 3GPP TS 36.331. A message depicted in FIG. 12 is a message given to the MeNB 202 of the service area when the UE 1101 performs handover to a S cell of the HeNB 201.

"measResultNeighCells" indicated by reference numeral 1201 indicates a neighbor cell that is a connection candidate in the measurement results of nearby cells measured by the UE 1101. For example, communication schemes include EUTRA, UTRA, GERAN, CDMA2000, etc. Reference numeral 1202 indicates that EUTRA(LTE) has been found among such communication schemes.

As indicated by reference numeral 1203, EUTRA includes physCellId (physical ID) and cgi. "cgi" includes cellGlobalId and trackingAreaCode. Further, as indicated by reference numeral 1204, cellGlobalId includes plmn-Identity and cellIdentity. "cellIdentity" is represented by 28 bits. Measurement results such as these are transmitted from the UE 1101 to the MeNB 202.

### (Example of S1AP: HANDOVER REQUIRED)

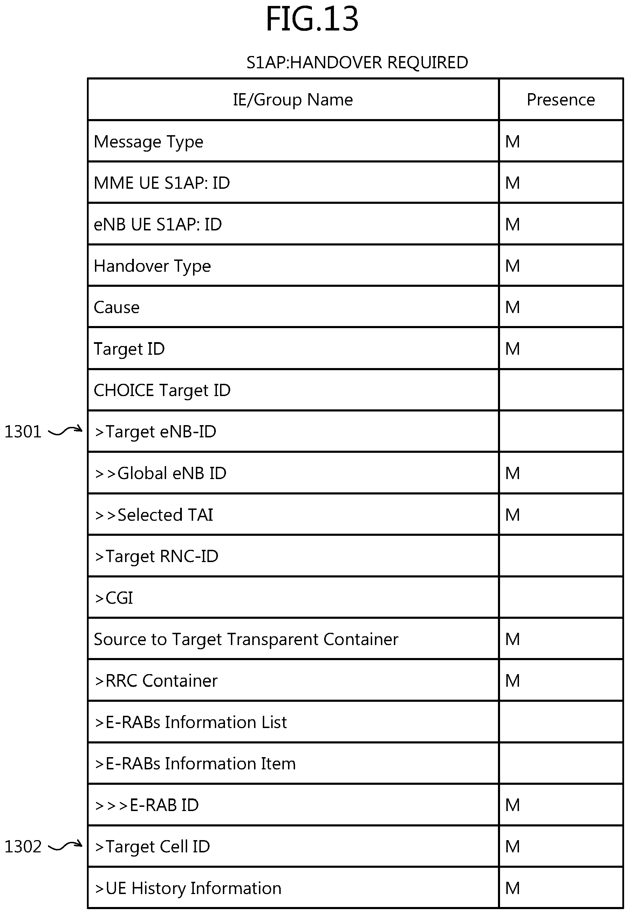

FIG. 13 is a diagram depicting an example of a S1AP: HANDOVER REQUIRED. In the description of FIG. 13, description concerning points similar to the S1 SETUP REQUEST, etc. described with reference to FIG. 4 will be omitted. The HANDOVER REQUIRED depicted in FIG. 13 complies with 3GPP TS 36.413.

In the HANDOVER REQUIRED, "Target eNB-ID" indicated by reference numeral 1301, for example, corresponds to cellGlobalId indicated by reference numeral 1204 in FIG. 12. "Target eNB-ID" indicated by reference numeral 1301 includes at a lower level, "Global eNB ID" and "Selected TAI". "Global eNB ID", for example, is a value equal to cellGlobalId indicated by reference numeral 1203 in FIG. 12 and is represented by 28 bits. Further, "Target Cell-ID" indicated by reference numeral 1302 is also a value equal to cellGlobalId indicated by reference numeral 1203 in FIG. 12 and is represented by 28 bits.

"Selected TAI" of "Target eNB-ID" indicated by reference numeral 1301 indicates the TAI used in TAI routing. "Selected TAI" is represented by a combination of plmn-Identity indicated by reference numeral 1204 and trackingAreaCode indicated by reference numeral 1203 in FIG. 12. A HANDOVER REQUIRED such as this is transmitted from the MeNB 202 to the MME 204.

### (Example of S1AP: HANDOVER REQUEST)

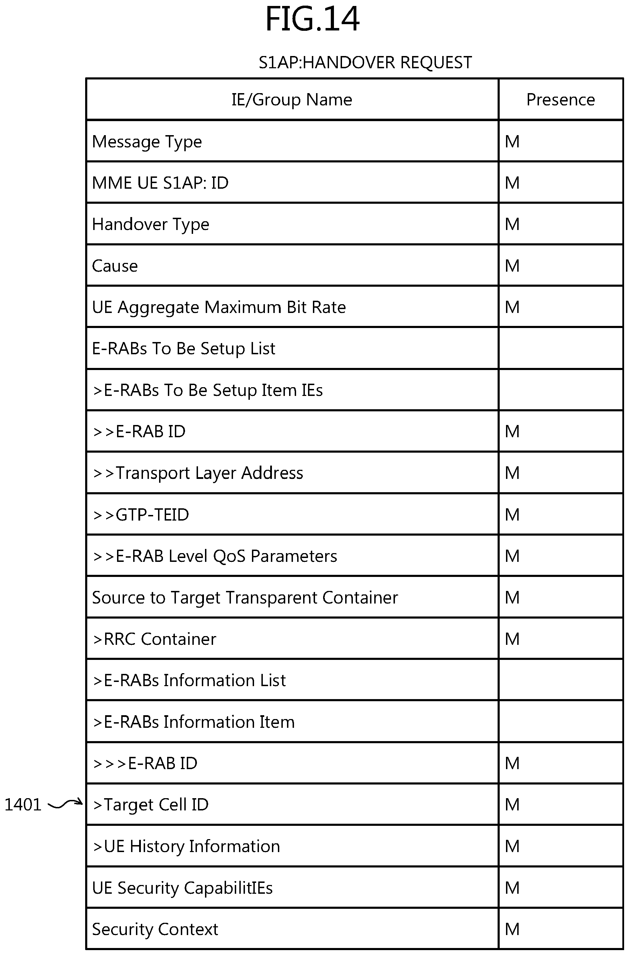

FIG. 14 is a diagram depicting an example of a S1AP: HANDOVER REQUEST. In the description of FIG. 14, description concerning points similar to the S1 SETUP REQUEST, etc. described with reference to FIG. 4 will be omitted. The HANDOVER REQUEST depicted in FIG. 14 complies with 3GPP TS 36.413.

In the HANDOVER REQUEST, "Target Cell ID" indicated by reference numeral 1401, for example, is a value equal to "Target Cell-ID" indicated by reference numeral 1302 in FIG. 13 and is represented by 28 bits. A HANDOVER REQUEST such as this is transmitted from the MME 204 to the HeNB-GW 203, or from the HeNB-GW 203 to the HeNB 201.

### (Example of transfer control process performed by HeNB-GW)

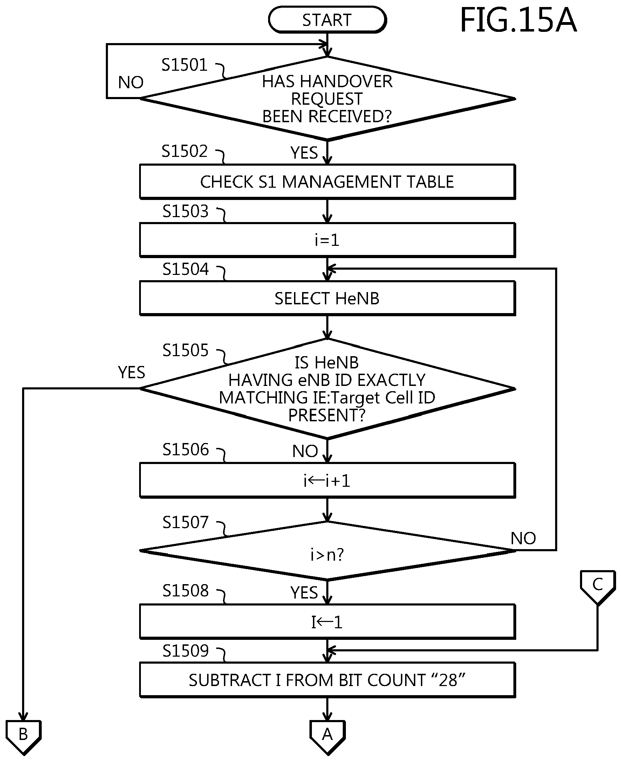

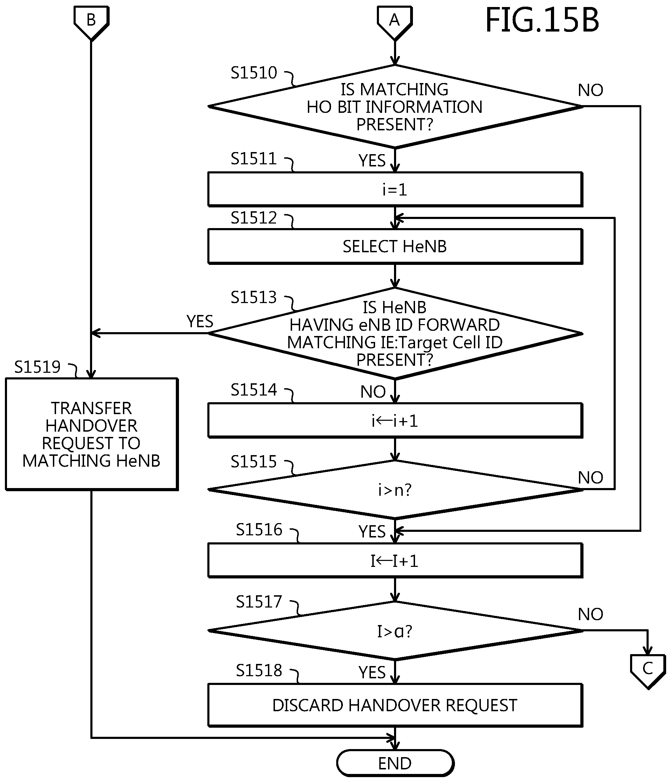

FIG. 15A is a flowchart (part 1) of an example of a transfer control process performed by the HeNB-GW. FIG. 15B is a flowchart (part 2) of the example of the transfer control process performed by the HeNB-GW. As depicted in FIGs. 15A and 15B, the HeNB-GW 203 judges whether a HANDOVER REQUEST has been received from the MME 204 (step S1501). The HeNB-GW 203 stands by until receiving a HANDOVER REQUEST (step S1501: NO). Upon receiving a HANDOVER REQUEST (step S1501: YES), the HeNB-GW 203 checks the S1 management table TB (step S1502).

The HeNB-GW 203 sets i (i=1 to n), which represents a value of the n accommodated HeNBs 201, to "1" (step S1503). The HeNB-GW 203 selects the i-th HeNB 201 among the n HeNBs 201 (step S1504).

The HeNB-GW 203 judges whether a HeNB 201 having an eNB ID in the S1 management table TB, exactly matching the IE:Target Cell ID (refer to reference numeral 1401 in FIG. 14) is present (step S1505). When an exactly matching HeNB 201 is present (step S1505: YES), the HeNB-GW 203 transfers the HANDOVER REQUEST to the matching HeNB 201 (step S1519), and ends the series of operations.

When the IE:Target Cell ID and an eNB ID of the S1 management table TB do not exactly match (step S1505: NO), the HeNB-GW 203 adds "1" to i (step S1506). The HeNB-GW 203 judges whether i is greater than n (step S1507). When i is n or less (step S1507: NO), the HeNB-GW 203 transitions to step S1504.

When i is greater than n (step S1507: YES), the HeNB-GW 203 sets I, which is a subtrahend to be subtracted from the bit count "28", to "1" (step S1508). The HeNB-GW 203 subtracts I from the bit count "28" (step S1509). The HeNB-GW 203 judges whether HO bit information matching the difference of I subtracted from the bit count "28" is present in the S1 management table TB (step S1510).

When no HO bit information matching the difference of I subtracted from the bit count "28" is present (step S1510: NO), the HeNB-GW 203 transitions to step S1516. When HO bit information matching the difference of I subtracted from the bit count "28" is present (step S1510: YES), the HeNB-GW 203 sets i (i=1 to n), which represents the value of the n accommodated HeNB-GWs 203, to "1" (step S1511). The HeNB-GW 203 selects the i-th HeNB 201 among the n HeNBs 201 (step S1512).

The HeNB-GW 203 judges whether a HeNB 201 having an eNB ID in the S1 management table TB, forward matching the IE:Target Cell ID is present (step S1513). When an HeNB 201 having an eNB ID in the S1 management table TB, forward matching the IE:Target Cell ID is present (step S1513: YES), the HeNB-GW 203 transitions to step S1519.

When no HeNB 201 having an eNB ID in the S1 management table TB, forward matching the IE:Target Cell ID is present (step S1513: NO), the HeNB-GW 203 adds "1" to i (step S1514). The HeNB-GW 203 judges whether i is greater than n (step S1515). When i is n or less (step S1515: NO), the HeNB-GW 203 transitions to step S1512. When i is greater than n (step S1515: YES), the HeNB-GW 203 adds "1" to I (step S1516).

The HeNB-GW 203 judges whether I is greater than a predetermined value α (step S1517). The predetermined value α, for example, may be an arbitrary integer from 0 to 27. When I is the predetermined value α or less (step S1517: NO), the HeNB-GW 203 transitions to step S1509. When I is greater than the predetermined value α (step S1517: YES), the HeNB-GW 203 discards the HANDOVER REQUEST (step S1518), and although not depicted, transmits a HANDOVER FAILURE to the MME 204 and ends the series of operations.

### (Example of eNB ID identifiable by transfer control process of HeNB-GW)

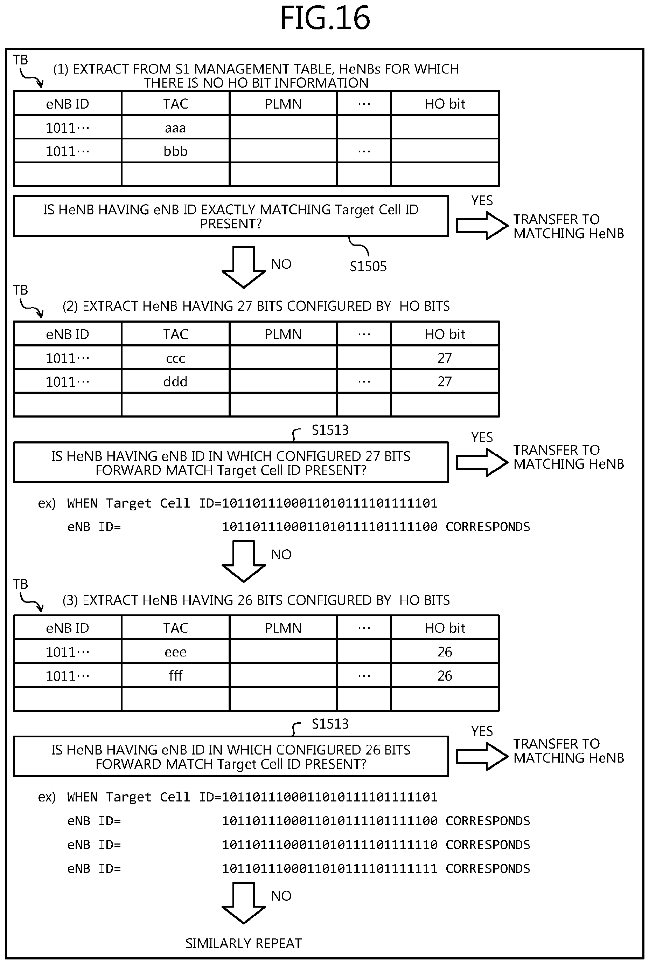

FIG. 16 is a diagram depicting an example of an eNB ID identifiable in the transfer control process of the HeNB-GW. As depicted in FIG. 16, the HeNB-GW 203 extracts from the S1 management table TB, eNB IDs (the HeNBs 201) for which there is no HO bit information. The HeNB-GW 203 judges whether in the S1 management table TB, an eNB ID exactly matching the Target Cell ID is present (similar to step S1505 in FIG. 15A).

When an eNB ID exactly matching the Target Cell ID is present in the S1 management table TB, the HeNB-GW 203 transmits the HANDOVER REQUEST to the HeNB 201 accommodating the exactly matching eNB ID. When no exactly matching eNB ID is present, the HeNB-GW 203 refers to the S1 management table TB and judges whether an eNB ID having an upper 27 bits that forward match the Target Cell ID is present (similar to step S1513 in FIG. 15B).

When an eNB ID having an upper 27 bits that forward match the Target Cell ID is present in the S1 management table TB, the HeNB-GW 203 transmits the HANDOVER REQUEST to the HeNB 201 accommodating the forward matching eNB ID. For example, when the forward matching portion common between cells of the HeNB 201 is 27 bits, a Target Cell ID that differs from the eNB ID at the last 1 digit may be identified.

In particular, with respect to a Target Cell ID having a last 1-digit of 1, a registered eNB ID having a last 1-digit of 0 is also judged to forward match. At the HeNB 201, matching of the Cell Identity of an accommodated cell and the Target Cell ID is judged whereby the Target Cell ID may be identified.

When no eNB ID having an upper 27 bits that forward match is present, the HeNB-GW 203 refers to the HO bit information of the S1 management table TB and judges whether an eNB ID having an upper 26 bits that forward match the Target Cell ID is present (similar to step S1513 in FIG. 15B).

When an eNB ID having an upper 26 bits forward matching the Target Cell ID is present in the S1 management table TB, the HeNB-GW 203 transfers the HANDOVER REQUEST to the HeNB 201 accommodating the forward matching eNB ID.

For example, when the forward matching portion common among the cells of the HeNB 201 is 26 bits, a Target Cell ID that differs from the eNB ID at the last 2 digits may be identified. In particular, with respect to a Target Cell ID whose last 2 digits are 01, registered eNB IDs whose last 2 digits are 00, 10, or 11 are judged to forward match. At the HeNB 201, matching of the Cell Identity of an accommodated cell and the Target Cell ID is judged whereby the Target Cell ID may be identified.

Although description concerning 25 bits and less is omitted, forward matching is similarly judged whereby the HANDOVER REQUEST may be transferred to the HeNB 201 accommodating the forward matching eNB ID.

In the embodiments, although a case where a HANDOVER REQUEST is used as a message addressed to the HeNB 201, without limitation hereto, application to a message having an actual destination in an IE is possible. For example, application to a MME DIRECT INFORMATION TRANSFER, and a MME CONFIGURATION TRANSFER is possible.

As described, the cell IDs of the cells accommodated by a HeNB 201 are common exclusive of the last several bits and the HeNB-GW 203 accommodating the HeNB 201 searches for an eNB ID that forward matches the Target Cell ID of a received signal. As a result, the HeNB-GW 203 is able to identify the HeNB 201 that is the transfer destination of the signal.

The HeNB 201 uses the transferred signal and is able to identify from among multiple accommodated cells, a cell that is the destination of the signal. As a result, the HeNB 201, for example, is able to perform a handover process.

Further, in the present embodiment, the number of upper bits common between cells may be changed according to the number of cells accommodated by the HeNB 201. Therefore, for example, when the number of cells accommodated by the HeNB 201 increases, among the 28 bits, the number of upper bits common between the cells may be decreased and the number of tail bits may be increased.

In the embodiment, with respect to the HeNBs 201, without using 20 bits of the 28 bits as an eNB ID for identifying the HeNB 201, the 28-bit eNB ID may be used as is to identify the HeNB 201 that is the transfer destination of a signal. Further, when a TAI is set for each HeNB 201, the TAIs increase and may become depleted. In the present embodiment, the HeNB 201 that is the transfer destination of a signal may be identified without increasing the TAIs.

In multiple cells (e.g., 2) of the HeNB 201, when two eNB IDs of 28 bits are obtained and two S1 set-ups are performed, the number of S1 set-ups increases. As a result, at the HeNB-GW 203 and the MME 204, the S1 interfaces become an enormous load that has to be managed. In the present embodiment, the HeNB 201 that is the transfer destination of a signal may be identified without increasing the S1 interfaces.

### (Modification example of embodiment)

A modification example of the embodiment will be described. In the modification example, a case will be described in which a transfer fails despite a HANDOVER REQUEST being transferred to a HeNB 201 having an eNB ID that matches. For example, a case will be described in which a common eNB ID has been configured between multiple HeNBs 201 and a request signal is transferred to the HeNB 201 having an eNB ID that matches.

### (Example of processing performed by HeNB)

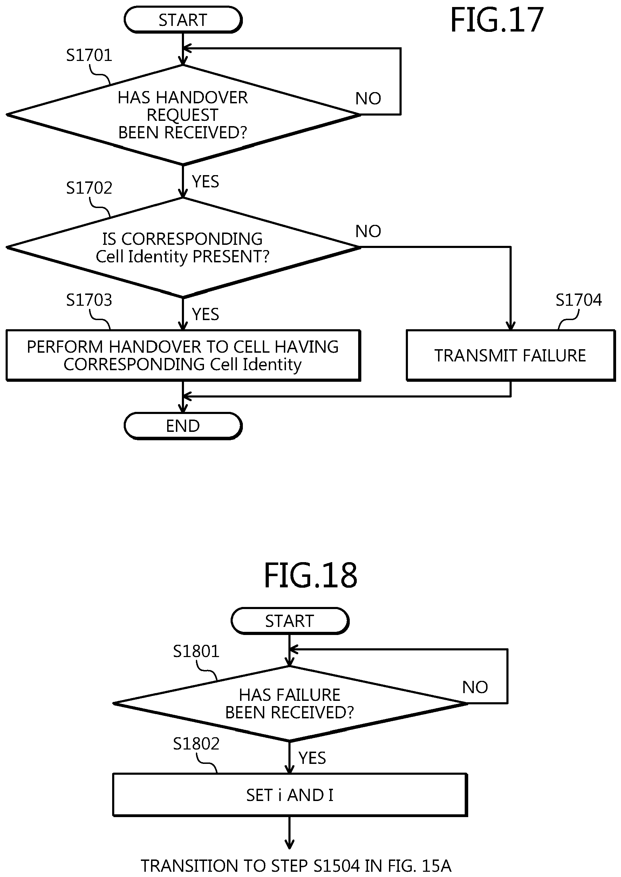

FIG. 17 is a flowchart of an example of processing performed by the HeNB. As depicted in FIG. 17, the HeNB 201 judges whether a HANDOVER REQUEST has been received from the HeNB-GW 203 (step S1701). The HeNB 201 stands by until receiving a HANDOVER REQUEST from the HeNB-GW 203 (step S1701: NO). Upon receiving a HANDOVER REQUEST (step S1701: YES), the HeNB 201 judges whether among 1 or more accommodated cells, a corresponding Cell Identity is present (step S1702).

When a corresponding Cell Identity is present (step S1702: YES), the HeNB 201 performs handover to the cell having the corresponding Cell Identity (step S1703), and ends the series of operations. When no corresponding Cell Identity is present (step S1702: NO), the HeNB 201 transmits to the HeNB-GW 203, a FAILURE indicating that no corresponding Cell Identity is present (step S1704), and ends the series of operations.

### (Example of transfer process performed by HeNB-GW in modification example)

FIG. 18 is a flowchart of an example of the handover process performed by HeNB-GW in the modification example. As depicted in FIG. 18, the HeNB-GW 203 judges whether FAILURE has been received from the HeNB 201 (step S1801). The HeNB-GW 203 stands by until receiving a FAILURE (step S1801: NO). Receipt of a FAILURE is a case in which the cell having the Cell Identity is not accommodated by the HeNB 201 that is the transfer destination.

Upon receiving a FAILURE (step S1801: YES), the HeNB-GW 203 again sets i and I when the Target Cell ID and the eNB ID match at step S1519 in FIG. 15B (step S1802). Subsequently, the HeNB-GW 203 transitions to step S1504 in FIG. 15A and performs processing from step S1504 in FIG. 15A.

In this case, in the processing depicted in FIGs. 15A and 15B, when another eNB ID having the same upper bits that forward match is present, the signal is transferred to the HeNB 201 accommodating this other eNB ID having the same forward matching upper bits. Further, when another eNB ID having the same upper bits that forward match is present, a search is performed for an eNB ID having the next longest forward matching upper bit count.

A trigger of the processing depicted in FIG. 18 is assumed to be receipt of a FAILURE, however, without limitation hereto, the trigger may be a case where there is no response from the HeNB 201 that is the transfer destination despite the HANDOVER REQUEST being transferred to the HeNB 201 having an eNB ID that forward matches.

As described, according to the modification example, even in a case where a failure in transfer occurs despite the HANDOVER REQUEST being transferred to the HeNB 201 having an eNB ID that matches, another eNB ID may be searched for and the HANDOVER REQUEST may be transferred.

### EXPLANATIONS OF LETTERS OR NUMERALS

- 100: base station system
- 111: storage unit
- 112: transfer control unit
- 113: associated information
- 120: base station
- 200: small base station system
- 201: HeNB
- 202: MeNB
- 203: HeNB-GW
- 204: MME
- 310: transmission interface
- 311: HeNB-side S1 transmitting/receiving unit
- 312: MME-side S1 transmitting/receiving unit
- 320: CPU
- 321: S1 interface establishing/updating unit
- 322: S1 message managing unit
- 323: HO-processing IE confirming unit
- 324: HO-message transfer destination determining unit
- 330: memory
- TB: S1 management table

## Claims

1. A relay apparatus comprising:
a storage unit configured to store in an associated manner, first identification information given to a first cell of a base station connected to the relay apparatus and a communication link between the base station and the relay apparatus, the first identification information being configured to have, exclusive of a predetermined tail position, values common to identification information given to a second cell of the base station different from the first cell; and
a transfer control unit configured to search the first identification information stored in the storage unit, for the first identification information that forward matches second identification information, and transfer a signal by a communication link stored in the storage unit and associated with the forward matching first identification information, when the first identification information matching the second identification information is not stored in the storage unit, the second identification information being included in the signal received from a second communications apparatus and indicating a destination base station of the signal.

2. The relay apparatus according to claim 1, wherein
the transfer control unit searches for the first identification information that matches the second identification information to a greatest extent among the first identification information that forward matches the second identification information, and transfers the signal by the communication link stored in the storage unit and associated with the first identification information that matches to the greatest extent.

3. The relay apparatus according to claim 2, wherein
the transfer control unit, when failing in transferring the signal by the communication link stored in the storage unit and associated with the first identification information matching the greatest extent, transfers the signal by the communication link stored in the storage unit and associated with the first identification information that matches the second identification information to a next greatest extent after the first identification information that matches to the greatest extent.

4. The relay apparatus according to one of claims 1 to 3, wherein
the predetermined tail position has a bit length that is a first bit length or less, and
the transfer control unit searches for the first identification information that forward matches the second identification information by a second bit length that corresponds to a difference of the first bit length and a bit length of the first identification information, and transfers the signal by the communication link stored in the storage unit and associated with the first identification information that forward matches the second identification information by the second bit length or more.

5. The relay apparatus according to one of claims 1 to 4, wherein
the signal is a signal requesting switching of a connection destination of a mobile station connected to a cell of the second base station to a cell of the destination base station, the second base station being different from the base station.

6. The relay apparatus according to one of claims 1 to 5, wherein
the transfer control unit transfers the signal by the communication link stored in the storage unit and associated with the first identification information matching the second identification information, when the first identification information matching the second identification information is stored in the storage unit.

7. A relay apparatus comprising:
a storage unit configured to store in an associated manner, first identification information given to a first cell of a base station connected to the relay apparatus and a communication link between the base station and the relay apparatus, the first identification information being configured to have, exclusive of a predetermined head position, values common to identification information given to a second cell of the base station different from the first cell; and
a transfer control unit configured to search the first identification information stored in the storage unit, for the first identification information that reverse matches second identification information, and transfer a signal by a communication link stored in the storage unit and associated with the reverse matching first identification information, when the first identification information matching the second identification information is not stored in the storage unit, the second identification information being included in the signal received from a second communications apparatus and indicating a destination base station of the signal.

8. A base station system comprising:
a relay apparatus configured to associate and store first identification information given to a first cell of a base station connected to the relay apparatus and a communication link between the base station and the relay apparatus, the first identification information being configured to have, exclusive of a predetermined tail position, values common to identification information given to a second cell of the base station different from the first cell; and configured to search the first identification information stored in the storage unit, for the first identification information that forward matches second identification information, and transfer a signal by a communication link stored in the storage unit and associated with the forward matching first identification information, when the first identification information matching the second identification information is not stored in the storage unit, the second identification information being included in the signal received from a second communications apparatus and indicating a destination base station of the signal; and
a base station configured to perform a process based on the signal transferred by the relay apparatus.
